# EUROPÄISCHE PATENTSCHRIFT

(11) **EP 3 638 464 B1**
(45) Veröffentlichungstag und Bekanntmachung des Hinweises auf die Patenterteilung: **08.12.2021**
(21) Anmeldenummer: 18734119.3
(22) Anmeldetag: 12.06.2018
(51) Int. Cl.: B21J 15/02, B21J 15/10, B21J 15/28, B25J 11/00, B25J 15/00

(54) **VORRICHTUNG ZUR KOMPENSATION VON FÜGEBEWEGUNGEN**
DEVICE FOR COMPENSATING JOINING MOTIONS
DISPOSITIF POUR LA COMPENSATION DE MOUVEMENTS D'ASSEMBLAGE

(30) Priorität: 14.06.2017 DE 102017113097
(43) Veröffentlichungstag der Anmeldung: 22.04.2020
(73) Patentinhaber: EJOT GmbH & Co. KG, 57319 Bad Berleburg (DE)
(72) Erfinder: THIEM, Joerg, 98544 Zella-Mehlis (DE); DUBIEL, Gerhard, 99897 Tambach-Dietharz (DE); ZEBISCH, Sebastian, 99897 Tambach-Dietharz (DE); MIELISCH, Marco, 99099 Erfurt (DE)
(74) Vertreter: Puschmann Borchert Kaiser Klettner Patentanwälte Partnerschaft mbB
(86) Internationale Anmeldenummer: PCT/EP2018/065520
(87) Internationale Veröffentlichungsnummer: WO 2018/229058

(56) Entgegenhaltungen:
- DE-A1-102014 015 183
- DE-A1-102016 005 844
- JP-A- S60 249 519

## Beschreibung

Die Erfindung betrifft eine Fügeeinheit für einen Gelenkarmroboter zum Fügen eines Bauteils mit einem Fügeelement unter Aufbringung einer Axialkraft auf das Fügeelement.

Beim Fügen von Bauteilen mit einem Gelenkarmroboter besteht das Problem, dass während der Aufbringung der Setzkraft, insbesondere bei Reibschweißvorgängen, ein Verkippen des Reibschweißelements stattfindet und dadurch einen orthogonal zur Oberfläche des Bauteils ausgerichteten Setzvorgang erschwert. Auch verliert eine zum Drehantrieb vorgesehene Drehspindel leicht den Eingriff mit den Antriebsstrukturen des Reibschweißelements. Dokument DE102014015183A1 offenbart den nächstliegenden Stand der Technik.

Es ist Aufgabe der Erfindung, eine Fügeeinheit für einen Gelenkarmroboter bereitzustellen, die ein zuverlässiges Setzen von Fügeelementen unter Axialkraft ermöglicht.

Eine Fügeeinheit für einen Gelenkarmroboter zum einseitigen Fügen eines Bauteils oder eines Bauteilverbundes mit einem Fügeelement unter Aufbringung einer Axialkraft umfasst ein Grundelement zum Anschluss an einen Gelenkarmroboter, insbesondere einen Flansch oder ein anderes Verbindungselement. Dieses Grundelement ist mit einer Vorschubeinheit verbunden, die relativ zum Grundelement in einer axialen Richtung in und entgegen der Setzrichtung bewegt ist. Die Vorschubeinheit trägt eine Setzeinrichtung, die zusammen mit der Vorschubeinheit bewegt ist. Die Setzeinrichtung wirkt über ein Fügeelement auf das Bauteil, um das Fügeelement mit dem Bauteil oder dem Bauteilverbund zu verbinden. Neben der Setzeinrichtung ist ein Druckstück ebenfalls mit der Vorschubeinheit verbunden, wobei das Druckstück ebenfalls auf das Bauteil wirkt. Das Druckstück ist über eine Koppeleinheit mit der Vorschubeinheit verbunden. Fährt die Vorschubeinheit nun auf das Bauteil zu, setzt das Druckstück auf das Bauteil auf.

In gängiger Weise ist die Koppeleinheit als Spiralfeder ausgebildet, die das Druckstück gegenüber der Vorschubeinheit lagert. Wenn das Druckstück nun auf das Bauteil aufsetzt, übt dies dann eine Federkraft auf das Bauteil oder den Bauteilverbund aus und kann so beispielsweise eine obere Bauteillage auf einer unteren Bauteillage mit dieser Kraft fixieren.

Erfindungsgemäß umfasst die Koppeleinheit eine Blockiereinheit, die ab einer vordefinierten axialen Blockierposition eine axiale Relativbewegung in Richtung der Vorschubeinheit verhindert und so die Kraft der Vorschubeinheit auf das Bauteil übertragen kann. Die Blockiereinheit ist derart ausgebildet, dass sie die Relativbewegung des Druckstücks so lange verhindert, bis eine in der Blockiereinheit eingestellte Blockierkraft erreicht ist. Ist die Blockierkraft überschritten, kann eine Bewegung zugelassen werden.

Ferner umfasst die Blockiereinheit eine Lösevorrichtung, durch deren Betätigung die Blockierkraft während des Prozesses reduziert bzw. vollständig weggenommen werden kann.

In dem Maße, in dem die blockierte Kraft reduziert wird, kann diese Kraft über die parallel wirkende Setzeinrichtung über das Fügeelement auf das Bauteil wirken.

Die Lösevorrichtung wird aktiviert, sobald das Fügeelement mit seiner Spitze auf das Bauteil aufsetzt.

Bevorzugt wirkt die Lösevorrichtung derart, dass die Blockierkraft, die zwischen Druckstück und Vorschubeinheit wirkt, schlagartig auf Null gesetzt wird. insbesondere ist die Blockierkraft während einer Vorspannphase konstant.

Durch das Beaufschlagen des Gelenkarmroboters mit der nachfolgend umzusetzenden Prozesskraft wird eine zusätzliche Relativbewegung zwischen dem Gelenkarmroboter und dem Bauteil verhindert. Dadurch wird während des Fügeprozesses ein Kippen des Fügeelements mit seinen negativen Auswirkungen auf das Fügeergebnis verhindert.

Gemäß einer ersten Ausführungsform kann die Blockiereinheit einen Elektromotor umfassen, der zwischen der Vorschubeinheit und dem Druckstück mit dem für die Erzeugung einer Blockierkraft notwendigen Drehmoment wirkt und bei Erreichen der Blockierkraft beispielsweise stromlos geschalten werden kann, sodass eine Relativbewegung zwischen Druckstück und Vorschubeinheit ermöglicht wird. Der innere Widerstand des Elektromotors im stromlosen Zustand wird als vernachlässigbar angesehen.

Gemäß einer weiteren Ausgestaltung kann die Blockiereinheit einen pneumatischen oder hydraulischen Zylinder umfassen. Der Kolben des Zylinders kann in dieser Ausführungsform mit dem für die Einstellung der gewünschten Blockierkraft notwendigen Druck beaufschlagt werden, Der Kolben fährt dabei im Zylinder auf Anschlag und vermeidet eine Kompression bis zum Erreichen der Blockierkraft.

Insbesondere ist der Zylinder als pneumatischer Zylinder ausgebildet, wodurch ab einer bestimmten Kraft, die über die voreingestellte Blockierkraft hinausgeht, eine Relativbewegung des Druckstücks aufgrund der Kompression der Luft ermöglicht wird. Dies ist ausreichend, um den Weg zwischen dem Druckstück und dem Fügeelement an der Setzeinrichtung zu überbrücken. Wie bereits erwähnt, wird bei Aufsetzen des Fügeelements die Lösevorrichtung betätigt, wodurch die von der Vorschubeinheit erzeugte Kraft über die Setzeinrichtung auf das Fügeelement wirkt.

Gemäß einer weiteren vorteilhaften Ausgestaltung kann vorgesehen sein, dass die Blockiereinheit ein Ventil, insbesondere ein Regelventil oder ein Überdruckventil, umfasst, das mit dem Zylinder verbunden ist. Auf diese Weise kann definiert ein Druck eingestellt werden, der auch bei Verwendung von inkompressiblen Medien eine Bewegung des Kolbens erlaubt, wenn die auf das Druckstück wirkende Kraft die Blockierkraft übersteigt.

Bevorzugt kann die Lösevorrichtung ein Entlüftungsventil umfassen. Durch die Verwendung eines Entlüftungsventils kann eine schnelle und einfache Freigabe bzw. ein Lösen der Blockiereinheit erfolgen.

Die Koppeleinheit kann ein Federelement, insbesondere eine Spiralfeder, umfassen, die parallel zur Blockiereinheit wirkend angeordnet sein kann. Auf diese Weise kann eine Grundstellung des Druckstücks gegenüber der Vorschubeinheit eingestellt werden, insbesondere wenn der axiale Weg des Druckstücks von der Vorschubeinheit weg durch einen Anschlag begrenzt wird. Auf diese Weise kann eine erste Anlage durch das Druckstück aufgrund der Federkraft erreicht werden, die dann eine axiale Relativbewegung des Druckstücks in Richtung der Vorschubeinheit zulässt, wobei dann bei Erreichen der Blockierposition die Weiterbewegung des Druckstücks verhindert wird.

Bevorzugt weist die Fügeeinheit eine Aufsetzerfassung auf, die den Zeitpunkt des Aufsetzens des Fügeelements auf das Bauteil erfasst, woraufhin die Löseeinrichtung betätigt wird. Eine Aufsetzerfassung ist insbesondere dann von Bedeutung, wenn bei Überschreiten der Blockierkraft eine weitere Relativbewegung zwischen Setzeinrichtung / Vorschubeinheit und Druckstück erfolgt.

Wird dann durch die Aufsetzerfassung ein Aufsetzen des Fügeelements auf dem Bauteil detektiert, kann die Lösevorrichtung betätigt werden, wodurch die Kraft der Vorschubeinheit dann ausschließlich über die Setzeinrichtung und das Fügeelement auf das Bauteil übertragen wird. Ein Versatz der Setzeinrichtung zum Bauteil erfolgt dann erst nach erfolgtem Setzvorgang.

Bevorzugt kann die Aufsetzerfassung einen Kraftsensor umfassen, der mit der Setzeinrichtung verbunden ist und die axiale Prozesskraft auf die Setzeinrichtung erfasst. Wird das Fügeelement über die Setzeinrichtung auf das Bauteil aufgesetzt, wird bei Weiterbewegung der Vorschubeinheit die Kraft, um die die Blockierkraft überschritten wird, am Kraftsensor detektiert, wodurch ein Aufsetzen zuverlässig erkannt wird. Der Kraftsensor kann ein Axialkraftsensor umfassend einen Dehnmessstreifen sein.

Die Aufsetzerfassung kann auch durch ein Wegmesssystem ggfs. unter Verwendung eines entsprechenden Sensors umgesetzt sein. Sie kann auch über den Antrieb der Vorschubeinheit erfolgen, beispielsweise über ein inkrementelles Wegmesssystem.

Alternativ kann die Erfassung auch über die Antriebsleistung der Vorschubeinheit erfolgen.

Die Setzeinrichtung kann eine Drehspindel umfassen, die ein Fügeelement unter Rotation in ein Bauteil oder einen Bauteilverbund einbringt.

Die Drehspindel wird derart betrieben, dass eine Drehzahl von 3.000 bis 10.000 /min erreicht werden kann, um eine Reibverbindung herzustellen.

Das Druckstück kann bevorzugt als Druckhülse ausgebildet sein und koaxial zur Setzeinrichtung, insbesondere zur Drehspindel angeordnet sein. Somit kann die Setzeinrichtung durch das Druckstück geführt werden, wodurch eine Führung und Sicherung des Fügeelements während des Fügevorgangs erfolgen kann.

Insbesondere wird die Vorschubeinheit derart betrieben, dass die Vorschubkraft während des Vorspannvorgangs und nach dem Betätigen der Lösevorrichtung konstant gehalten wird. Dadurch wird gewährleistet, dass die Spannung im System zwischen Gelenkarmroboter und Bauteil gleich bleibt, wodurch ein Versatz beim Fügevorgang weitestgehend eliminiert werden kann.

Insbesondere wird die Vorschubkraft während des gesamten Fügevorgangs konstant gehalten. Dies hat den Vorteil, dass die Summe der in Fügerichtung wirkenden Kräfte (z.B. Prozesskraft, Blockierkraft etc.) exakt der Kraft entspricht, mit der der Gelenkarmroboter vorgespannt ist.

Gemäß einem weiteren Aspekt der Erfindung betrifft diese ein Verfahren zum Fügen eines Bauteils mit einem Fügeelement unter Verwendung eines Gelenkroboters. An dem Gelenkroboter ist eine Vorschubeinheit zum axialen Einbringen eines Fügeelements in das Bauteil vorgesehen, wobei die Vorschubeinheit eine Setzeinrichtung umfasst, die mit einem Fügeelement bestückbar ist und mit einem Druckstück gegen das Bauteil gefahren wird. Der Gelenkarmroboter verfährt bei blockiertem Druckstück, wobei das Druckstück mit der Vorschubeinheit gegen das Bauteil an der Fügeposition aufgesetzt wird, wobei die aufgebrachte Kraft zu einem Vorspannen des Gelenkarmroboters führt. Ist die Blockierkraft erreicht und liegt das Fügeelement an der Oberfläche des Bauteils oder des Bauteilverbunds auf, wird die Lösevorrichtung betätigt. Die Blockiervorrichtung wird damit ausgeschaltet und eine Relativbewegung der Setzeinrichtung relativ zum Bauteil ermöglicht.

Dadurch wirkt nach dem Lösen der Blockierkraft die Vorschubeinheit ausschließlich über das aufgesetzte Fügeelement auf das Bauteil, wobei das aufgesetzte Fügeelement dann mit dem Vorschub in Höhe der vormaligen Blockierkraft in das Bauteil eingesetzt wird.

Da sich dadurch die Kraft, die auf das Bauteil wirkt, während des Fügevorgangs nicht ändert, kann ein Versatz der Setzeinrichtung zum Bauteil bis zum Abschluss des Fügevorgangs verhindert werden. So kann ein zuverlässiger und präziser Setzvorgang gewährleistet werden.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

### In den Figuren bedeutet:

- Fig. 1: ein erster Prozessschritt einer schematisch dargestellten erfindungsgemäßen Anordnung;
- Fig. 2: ein zweiter Prozessschritt einer schematisch dargestellten erfindungsgemäßen Anordnung;
- Fig. 3: ein dritter Prozessschritt einer schematisch dargestellten erfindungsgemäßen Anordnung;
- Fig. 4: ein vierter Prozessschritt einer schematisch dargestellten erfindungsgemäßen Anordnung;
- Fig. 5: ein erster Prozessschritt, einer weiteren erfindungsgemäßen Ausführungsform einer schematisch dargestellten Anordnung;
- Fig. 6: ein Zustand nach dem ersten Prozessschritt der erfindungsgemäßen Ausführungsform:
- Fig. 7: ein zweiter Prozessschritt einer weiteren erfindungsgemäßen Ausführungsform einer schematisch dargestellten Anordnung;
- Fig. 8: ein Zustand nach dem zweiten Prozessschritt der erfindungsgemäßen Ausführungsform; und
- Fig. 9: ein Endzustand des Fügevorgangs einer weiteren erfindungsgemäßen Ausführungsform einer schematisch dargestellten Anordnung.

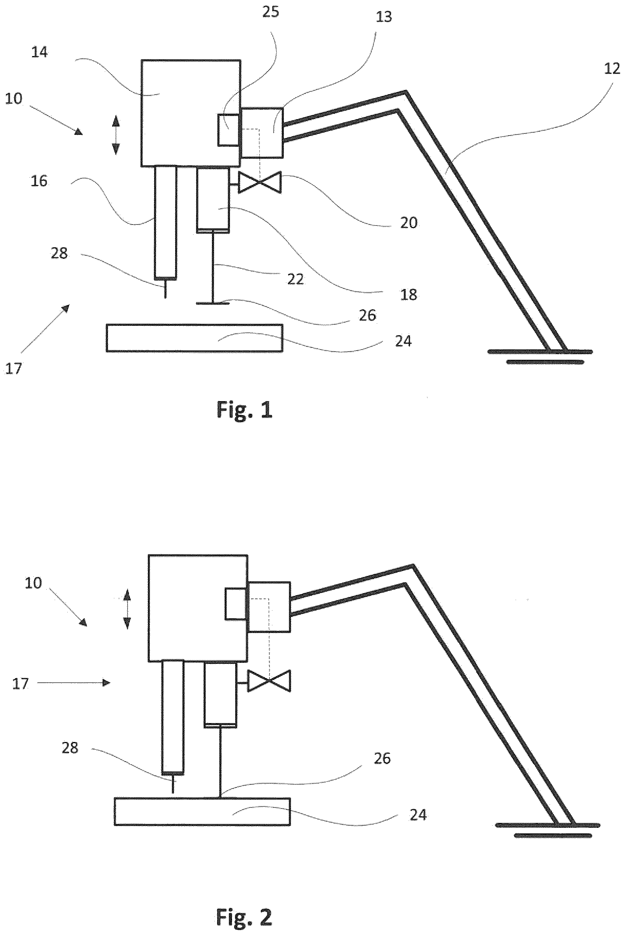

Fig. 1 zeigt eine erfindungsgemäße Fügeeinheit 10, die an einem schematisch dargestellten Gelenkarmroboter 12 befestigt ist. Die Fügeeinheit 10 weist ein Grundelement 13 auf, an welchem eine Vorschubeinheit 14 befestigt ist. Die Vorschubeinheit 14 ist in axialer Richtung relativ zum Grundelement 13 bewegbar. Mit der Vorschubeinheit 14 ist eine Setzeinrichtung, die in Form einer Drehspindel 16 ausgebildet ist, verbunden. Ferner ist parallel wirkend zur Drehspindel 16 eine Koppeleinheit 17 vorgesehen, die ein Druckstück 26 an die Vorschubeinheit 14 koppelt. Die Koppeleinheit 17 umfasst eine Blockiereinheit, die in Form eines pneumatischen Zylinders 18 ausgebildet ist, der an der Vorschubeinheit 14 angebunden ist. An dem pneumatischen Zylinder 18 ist ein Entlüftungsventil 20 vorgesehen, das als Lösevorrichtung wirkt und den Druck, mit dem der Kolben 22 des Zylinders 18 beaufschlagt wird, abbauen kann. Am Ende des Kolbens 22, das einem Bauteil 24 zugewandt ist, ist ein Druckstück 26 angeordnet, über welches eine Presskraft auf das Bauteil 24 übertragen werden kann. Gemäß dem vorliegenden Ausführungsbeispiel ist die Blockierposition, ab welcher die Relativbewegung des Druckstücks 26 unterhalb der Blockierkraft unterbunden wird, fest auf die maximale Auszugslänge des Kolbens 22 eingestellt. Die Entfernung des Druckstücks 26 von der Vorschubeinheit 14 ist dabei etwas größer als die Entfernung der Spitze des an der Drehspindel 16 festgelegten Fügeelements 28 von der Vorschubeinheit 14. Im vorliegenden Fall ist die Blockierkraft auf 2 kN eingestellt. Der Druck im pneumatischen Zylinder 18 ist dabei so eingestellt, dass bis zu einer anliegenden Kraft von 2kN von einem starren Verhalten des pneumatischen Zylinders ausgegangen werden kann. Ab Erreichen der Blockierkraft kann durch die Kompression der Luft im Zylinder eine Relativbewegung des Druckstücks 26 zur Vorschubeinheit 14 stattfinden. Zudem ist eine Aufsetzerfassung 25 mit der Vorschubeinheit 14 und dem Entlüftungsventil 20 verbunden.

Wie Fig. 2 weiter zeigt, wird diese Kraft von der Vorschubeinheit 14 auf das Bauteil 24 übertragen. Dadurch wird der Gelenkarmroboter 12 vorgespannt, wobei sich während dieses Vorspannvorgangs abhängig von den Winkelstellungen des Gelenkarmroboters 12 ein Versatz des Druckstücks 26 zum Bauteil 24 ergibt. Auf diese Weise kann eine Vorspannung aufgebaut werden, bevor das Fügeelement 28 auf das Bauteil 24 aufsetzt.

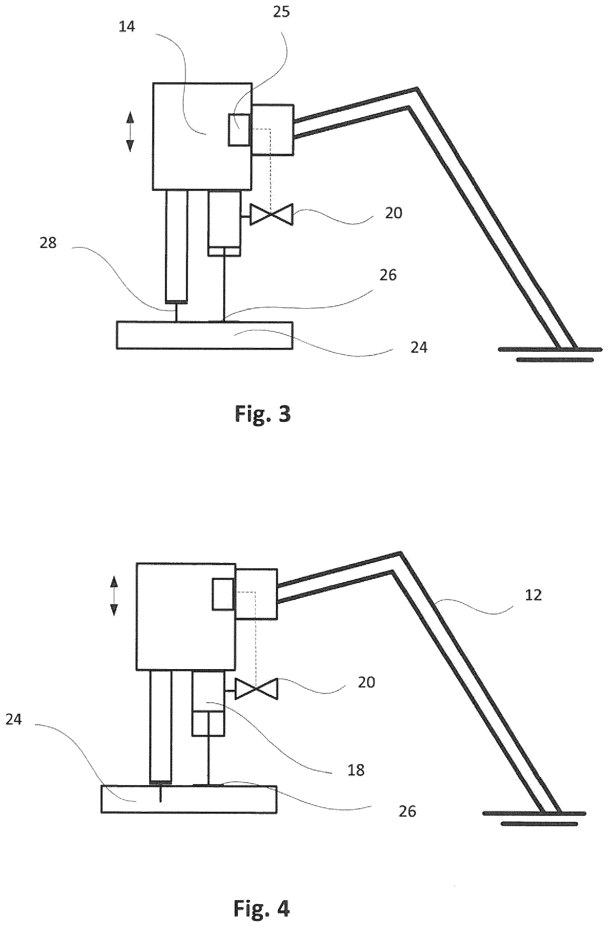

Fig. 3 zeigt eine weitere Stellung im Setzvorgang. Die Vorschubeinheit 14 bringt in dieser Phase des Fügeprozesses eine die Blockierkraft von 2 kN überschreitende Vorschubkraft auf. Dadurch erfolgt eine Kompression des Fluids in der Druckkammer, obwohl das angeschlossene Entlüftungsventil 20 noch geschlossen ist. Durch die Kompression des Fluids in der Druckkammer wird eine Relativbewegung des Druckstücks 26 gegenüber der Vorschubeinheit 14 insoweit ermöglicht, bis die Spitze des Fügeelements 28 auf das Bauteil 24 aufsetzt. Dieser Moment führt zur Betätigung der Lösevorrichtung in Form des Entlüftungsventils 20.

Fig. 4 zeigt den Zustand, wie er nach Öffnen des Entlüftungsventils 20 eintritt. Die Druckkammer des pneumatischen Zylinders 18 wird durch Öffnen des Entlüftungsventils 20 entlüftet, wodurch über das Druckstück 26 keine Kraft mehr zwischen Bauteil 24 und Gelenkarmroboter 12 übertragen werden kann. Dies hat zur Folge, dass die Kraft ausschließlich über das Fügeelement 28 übertragen wird, welches über die Drehspindel 16 auf das Bauteil 24 gedrückt wird. Dies hat zur Folge, dass das Fügeelement 28 mit einer Vorschubkraft in Höhe der Blockierkraft in das Bauteil 24 eingetrieben wird. Da zwischen dem Gelenkarmroboter 12 und dem Bauteil 24 ein unverändertes Kräfteverhältnis vorliegt, kann der Setzvorgang des Fügeelements 28 durchgeführt werden, ohne dass sich ein Versatz während des Fügeprozesses ergibt.

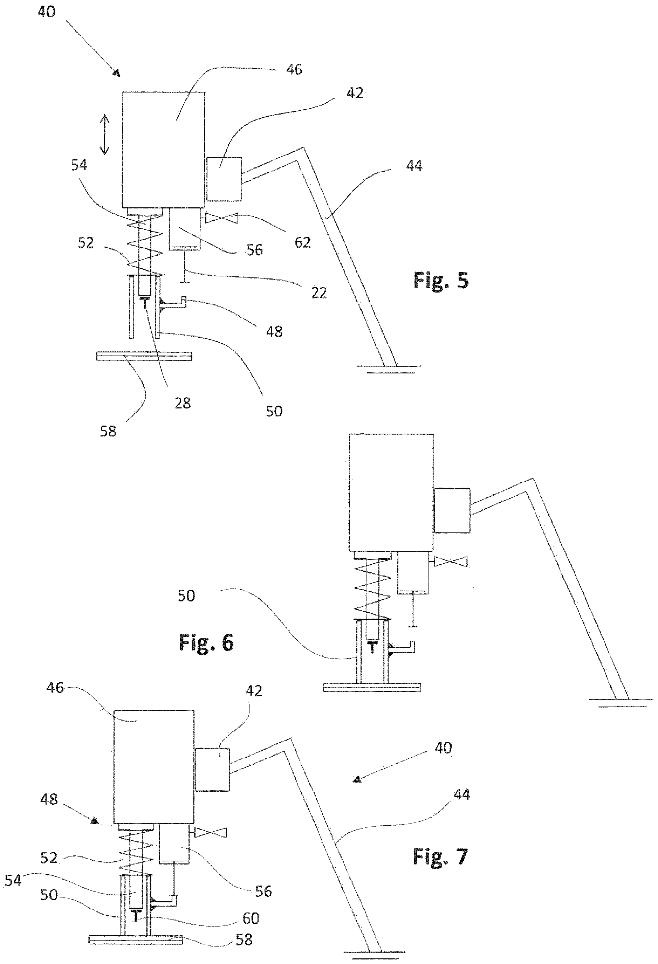

Fig. 5 zeigt eine schematische Ansicht einer weiteren Ausgestaltung einer erfindungsgemäßen Fügeeinheit 40. Die Fügeeinheit 40 umfasst ein Grundelement 42, welches an einem Gelenkarmroboter 44 befestigt ist. Wie in den vorangehenden Figuren beschrieben umfasst die Fügeeinheit 40 eine Vorschubeinheit 46, die in axialer Setzrichtung bewegbar ist. Ferner ist eine Koppeleinrichtung 48 vorgesehen, die ein hohlzylindrisches Druckstück 50 mit der Vorschubeinheit 46 verbindet. Die Koppeleinrichtung 48 umfasst eine Spiralfeder 52 die koaxial zum hohlzylindrischen Druckstück 50 und zu einer durch das Druckstück 50 geführten Drehspindel 54 liegt. Zudem weist die Koppeleinrichtung 48 eine Blockiereinheit auf, die in Form eines pneumatischen Zylinders 56 ausgebildet ist. Analog der Ausführung gemäß den Figuren 1 bis 4 kann auch eine Aufsetzerfassung in die Fügeeinheit integriert sein.

Entgegen der Ausführung gemäß den Figuren 1 bis 4 ist die Blockierposition des Druckstücks 50 nicht gleich bei Aufsetzen auf das Bauteil bzw. den Bauteilverbund 58 erreicht.

Gemäß Fig. 5 wird die Vorschubeinheit 46 in einem ersten Schritt gegen den Bauteilverbund 58 gefahren, bis eine Anlage des Druckstücks 50 an dem Bauteilverbund erreicht ist. Diese Position ist in Fig. 6 dargestellt.

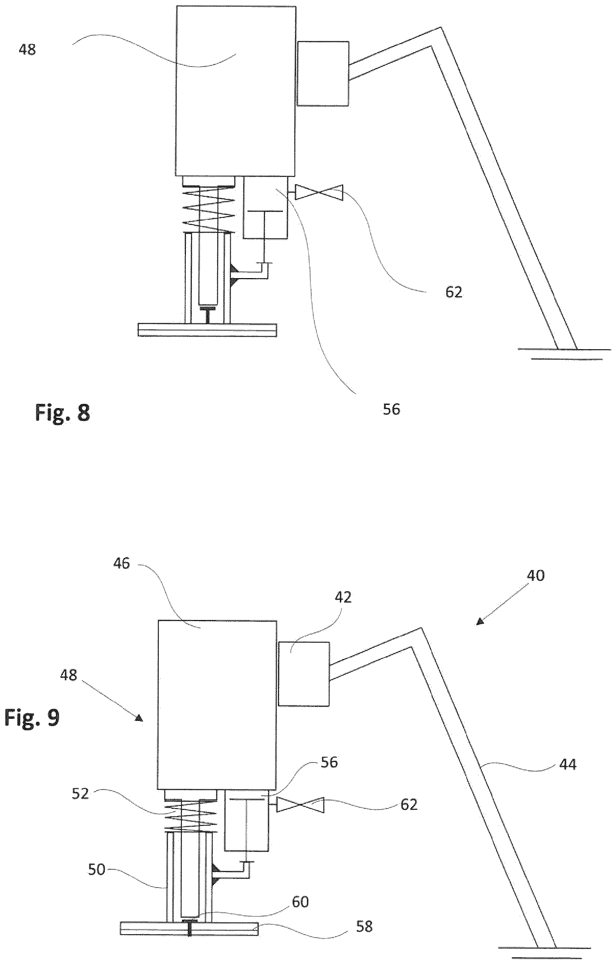

Wie in Fig. 7 gezeigt, wird in einem zweiten Schritt nach Aufsetzen des Druckstücks 50 unter Vorschub der Vorschubeinheit 46 die Spiralfeder 52 gegenüber dem Bauteilverbund 58 so lange komprimiert, bis der pneumatische Zylinder 56 eine weitere Relativbewegung des Druckstücks 50 in Richtung der Vorschubeinheit 46 blockiert. Bis zu dieser Position wirkt nur die Federkraft der Feder 52 auf das Druckstück 50. Sobald das Druckstück die Blockierposition erreicht hat und der pneumatische Zylinder 56 mit seiner voreingestellten Blockierkraft wirkt, kann diese auf den Bauteilverbund 58 übertragen werden. Wirkt die Vorschubeinheit nun mit einer Kraft, die etwas größer als die Blockierkraft ist, wird das Luftvolumen in dem Zylinder 56 bei geschlossenem Entlüftungsventil 62 weiter komprimiert, bis das Fügeelement 60 auf dem Bauteilverbund aufsitzt, wie es in Fig. 8 dargestellt ist.

Das an der Drehspindel 54 gehaltene Fügeelement 60 befindet sich mit seiner Spitze noch oberhalb des Bauteils 58. Der Fügeprozess findet analog zu dem in den Figuren 1 bis 4 beschriebenen Fügeprozess statt. So wird bei Aufsetzen des Fügeelements, was über eine in die Vorschubeinheit 46 integrierte Kraftmesseinrichtung detektiert wird, eine Lösevorrichtung betätigt, die gemäß der vorliegenden Ausführung als Entlüftungsventil 62 ausgebildet ist und welches zur Lösung entlüftet wird. Dadurch erfolgt die vollständige und schnelle Entlüftung des pneumatischen Zylinders 56 und das Fügeelement 60 wird unter Rotation und Axialkraft, die in etwa der vordefinierten Blockierkraft entspricht, in den Bauteilverbund 58 eingetrieben und verbindet im vorliegenden Fall, die beiden Bauteillagen des Bauteilverbundes 58 miteinander.

Fig. 9 zeigt diesen endgültigen Zustand mit entlüftetem Zylinder 62, bei dem das Fügeelement 60 die beiden Bauteillagen des Bauteilverbundes 58 verbindet.

## Patentansprüche

1. Fügeeinheit (10, 40) für einen Gelenkarmroboter (12, 44) zum Fügen eines Bauteils (24, 58) mit einem Fügeelement (28, 60) unter Aufbringung einer Axialkraft, wobei die Fügeeinheit (10, 40) ein Grundelement (14, 42) zum Anschluss an einen Gelenkarmroboter (12, 44) umfasst, wobei das Grundelement (14, 42) mit einer Vorschubeinheit (13, 46) verbunden ist, die relativ zum Grundelement (14, 42) in einer Axialrichtung in und entgegen einer Setzrichtung bewegbar ist, wobei die Vorschubeinheit (13, 46) mit einer Setzeinrichtung (16, 54) verbunden ist, die zusammen mit der Vorschubeinheit (13, 46) bewegbar ist, wobei ferner ein in und entgegen der Setzrichtung beweglich gegenüber der Vorschubeinheit (13, 46) gelagertes Druckstück (26, 50) über eine Koppeleinheit (17, 48) mit der Vorschubeinheit (13, 46) verbunden ist, **dadurch gekennzeichnet, dass** die Koppeleinheit (17, 48) eine Blockiereinheit (18, 56) umfasst, die ab einer vordefinierten axialen Blockierposition eine Relativbewegung des Druckstücks (26, 50) gegenüber der Vorschubeinheit (13, 46) entgegen der Setzrichtung verhindert, solange die Vorschubkraft kleiner als die eingestellte Blockierkraft ist, wobei die Blockiereinheit eine Lösevorrichtung (20, 62) umfasst, durch die die Relativbewegung des Druckstücks (26, 50) entgegen der Setzrichtung ermöglicht wird.

2. Fügeeinheit nach Anspruch 1, **dadurch gekennzeichnet, dass** die Blockiereinheit (18, 56) derart ausgebildet ist, dass die Blockierkraft konstant ist.

3. Fügeeinheit nach Anspruch 1 oder 2, **dadurch gekennzeichnet, dass** die Blockiereinheit (18, 56) einen pneumatischen Zylinder (18, 56) oder hydraulischen Zylinder umfasst.

4. Fügeeinheit nach Anspruch 3, **dadurch gekennzeichnet, dass** die Blockiereinheit (18, 56) ein Ventil, insbesondere ein Regelventil oder ein Überdruckventil, umfasst, das mit dem Zylinder verbunden ist.

5. Fügeeinheit nach Anspruch 3 oder 4, **dadurch gekennzeichnet, dass** die Lösevorrichtung ein Entlüftungsventil (20, 62) umfasst.

6. Fügeeinheit nach Anspruch 1 oder 2, **dadurch gekennzeichnet, dass** die Blockiereinheit (18, 56) einen Elektromotor umfasst.

7. Fügeeinheit nach einem der vorangehenden Ansprüche, **dadurch gekennzeichnet, dass** die Blockiereinheit (18, 56) unmittelbar auf das Druckstück (26, 50) wirkt.

8. Fügeeinheit nach einem der vorangehenden Ansprüche, **dadurch gekennzeichnet, dass** die Blockiereinheit (18, 56) ein Anlageelement umfasst, das auf das zu fügende Bauteil (24, 58) wirkt.

9. Fügeeinheit nach einem der vorangehenden Ansprüche, **dadurch gekennzeichnet, dass** die Koppeleinheit (48) eine Feder (52) umfasst, die eine Grundstellung des Druckstücks (50) gegenüber der Vorschubeinheit (46) einstellt.

10. Fügeeinheit nach einem der vorangehenden Ansprüche, **dadurch gekennzeichnet, dass** nach Betätigen der Lösevorrichtung (20, 62) die Vorschubkraft über die Setzeinrichtung (16, 54) auf das Fügeelement wirkt.

11. Fügeeinheit nach einem der vorangehenden Ansprüche, **dadurch gekennzeichnet, dass** eine Aufsetzerfassung (25) mit der Vorschubeinheit (13) verbunden ist, die den Zeitpunkt des Aufsetzens des Fügeelements auf das Bauteil (28) erfasst, woraufhin die Lösevorrichtung (20) betätigt wird.

12. Fügeeinheit nach Anspruch 9, **dadurch gekennzeichnet, dass** die Aufsetzerfassung (25) einen Kraftsensor umfasst, der mit der Setzeinrichtung (16, 54) verbunden ist und die axiale Prozesskraft auf die Setzeinrichtung (16, 54) erfasst.

13. Fügeeinheit nach Anspruch 9, **dadurch gekennzeichnet, dass** die Aufsetzerfassung (25) über den Antrieb der Vorschubeinheit (13) erfolgt.

14. Fügeeinheit nach einem der vorangehenden Ansprüche, **dadurch gekennzeichnet, dass** die Setzeinrichtung eine Drehspindel (16, 54) umfasst.

15. Fügeeinheit nach Anspruch 14, **dadurch gekennzeichnet, dass** die Drehspindel eine Drehzahl von 3.000 / min bis 10.000 /min herstellen kann, um eine kraft-, form- oder stoffschlüssige Verbindung oder eine Kombination aus den drei genannten herzustellen.

16. Fügeeinheit nach Anspruch 14 oder 15, **dadurch gekennzeichnet, dass** die Setzeinrichtung durch das Druckstück (26, 50) geführt wird, wobei das Druckstück (26, 50) hohlzylindrisch ausgebildet ist.

17. Fügeeinheit nach einem der vorangehenden Ansprüche, **dadurch gekennzeichnet, dass** die Vorschubkraft während des Vorspannvorgangs und nach dem Betätigen der Lösevorrichtung (20, 62) konstant gehalten wird.

18. Verfahren zum Fügen eines Bauteils (24, 58) mit einem Fügeelement (28, 60) unter Verwendung eines Gelenkroboters, wobei an dem Gelenkroboter eine Vorschubeinheit (13, 46) zum axialen Einbringen eines Fügeelements (28, 60) in das Bauteil (24, 58) vorgesehen ist, wobei die Vorschubeinheit (13, 46) eine Setzeinrichtung (16, 54) umfasst, die mit einem Fügeelement (28, 60) bestückbar ist und gegen das Bauteil (24, 58) gefahren wird, wobei eine lösbare Blockiervorrichtung die Relativbewegung der Setzeinrichtung (16, 54) relativ zum Bauteil (24, 58) durch ein Druckstück (26, 50) begrenzt, sofern die aufgebrachte Vorschubkraft kleiner als eine voreingestellte Blockierkraft ist, wobei bei Aufsetzen des Fügeelements (28, 60) die Blockiervorrichtung gelöst wird und dadurch die Vorschubkraft in der Höhe der Blockierkraft über die Setzeinrichtung (16, 54) und das Fügeelement (28, 60) und damit auf das Bauteil (24, 58) übertragen wird.

19. Verfahren nach Anspruch 18, **dadurch gekennzeichnet, dass** die Vorspannkraft in der Höhe der Blockierkraft bis zum Ende des Fügevorgangs wirkt.

20. Verfahren nach Anspruch 18 oder 19, **dadurch gekennzeichnet, dass** die Vorschubkraft während des gesamten Fügevorgangs konstant gehalten wird.

21. Verfahren nach einem der Ansprüche 18 bis 20, **dadurch gekennzeichnet, dass** eine Fügeeinheit gemäß einem der Ansprüche 1 bis 17 verwendet wird.

## Claims

1. Joining unit (10, 40) for an articulated robot (12, 44), for joining a component (24, 58) to a joining element (28, 60) while applying an axial force, said joining unit (10, 40) comprising a base element (14, 42) for connection to an articulated robot (12, 44), said base element (14, 42) being connected to a feed unit (13, 46) which latter is adapted to move relative to the base element (14, 42) in an axial direction in and against a setting direction, with said feed unit (13, 46) being connected to a setting device (16, 54) which latter is adapted to move together with said feed unit (13, 46), wherein furthermore a pressure piece (26, 50) which is mounted so as to be movable in and against the setting direction relative to said feed unit (13, 46) is connected to said feed unit (13, 46) via a coupling unit (17, 48), **characterized in that** the coupling unit (17, 48) comprises a blocking unit (18, 56) which, from a predefined axial blocking position, prevents a relative movement of said pressure piece (26, 50) with respect to said feed unit (13, 46) against the setting direction as long as the feed force is smaller than the blocking force set, said blocking unit comprising a release device (20, 62) which enables the relative movement of said pressure piece (26, 50) against the setting direction.

2. Joining unit according to claim 1, **characterized in that** the blocking unit (18, 56) is designed in such a way that the blocking force is constant.

3. Joining unit according to claim 1 or 2, **characterized in that** the blocking unit (18, 56) comprises a pneumatic cylinder (18, 56) or a hydraulic cylinder.

4. Joining unit according to claim 3, **characterized in that** the blocking unit (18, 56) comprises a valve, in particular a control valve or a pressure relief valve that is connected to the cylinder.

5. Joining unit according to claims 3 or 4, **characterized in that** the release device comprises a vent valve (20, 62).

6. Joining unit according to claims 1 or 2, **characterized in that** the blocking unit (18, 56) comprises
an electric motor.

7. Joining unit according to any one of the preceding claims, **characterized in that** the blocking unit (18, 56) acts directly on the pressure piece (26, 50)

8. Joining unit according to any one of the preceding claims, **characterized in that** the blocking unit (18, 56) comprises an abutment element which acts on the component (24, 58) to be joined.

9. Joining unit according to any one of the preceding claims, **characterized in that** the coupling unit (48) comprises a spring (52) which sets a basic position of the pressure piece (50) relative to the feed unit (46).

10. Joining unit according to any one of the preceding claims, **characterized in that,** after actuation of the release device (20, 62), the feed force acts on the joining element via the setting device (16, 54).

11. Joining unit according to any one of the preceding claims, **characterized in that** a placement detection means (25) is connected to the feed unit (13), which means detects the time when the joining element is placed on the component (28), whereupon the release device (20) is actuated.

12. Joining unit according to claim 9, **characterized in that** the placement detection means (25) comprises a force sensor that is connected to the setting device (16, 54) and detects the axial process force acting on the setting device (16, 54).

13. Joining unit according to claim 9, **characterized in that** placement detection by the placement detection means (25) takes place via the drive of the feed unit (13).

14. Joining unit according to any one of the preceding claims, **characterized in that** the setting device comprises a rotary spindle (16, 54).

15. Joining unit according to claim 14, **characterized in that** the rotary spindle is adapted to achieve a speed of 3,000 rpm to 10,000 rpm in order to produce a force-fit connection, a form-fit connection or a material connection, or a combination of these three types of connection.

16. Joining unit according to one of claims 14 or 15, **characterized in that** the setting device is guided by the pressure piece (26, 50), which pressure piece (26, 50) is designed as a hollow cylinder.

17. Joining unit according to any one of the preceding claims, **characterized in that** the feed force is kept constant during the pretensioning operation and after actuation of the release device (20, 62).

18. Method for joining a component (24, 58) to a joining element (28, 60) using an articulated robot, wherein a feed unit (13, 46) for axially introducing a joining element (28, 60) into the component (24, 58) is provided on the articulated robot, wherein said feed unit (13, 46) comprises a setting device (16, 54) which can be equipped with a joining element (28, 60) and is moved into abutment on the component (24, 58), wherein a releasable blocking device limits the movement of the setting device (16, 54) relative to the component (24, 58) by means of a pressure piece (26, 50), if the applied feed force is smaller than a preset blocking force, wherein, once the joining element (28, 60) has been placed, the blocking device is released, thus causing the feed force, in the amount of the blocking force, to be transferred via the setting device (16, 54) and the joining element (28, 60) and thus on to the component (24, 58).

19. Method according to claim 18, **characterized in that** the pretensioning force continually acts in the amount of the blocking force until completion of the joining process.

20. Method according to claim 18 or 19, **characterized in that** the feed force is kept constant during the entire joining process.

21. Method according to any one of claims 18 to 20, **characterized in that** a joining unit as claimed in any one of claims 1 to 17 is used.

## Revendications

1. Unité d'assemblage (10, 40) pour un robot à bras articulé (12, 44) pour l'assemblage d'un composant (24, 58) avec un élément d'assemblage (28, 60) par application d'une force axiale, dans laquelle l'unité d'assemblage (10, 40) comprend un élément de base (14, 42) pour le raccordement à un robot à bras articulé (12, 44), dans laquelle l'élément de base (14, 42) est relié à une unité d'avance (13, 46), qui est mobile par rapport à l'élément de base (14, 42) dans une direction axiale dans et à l'encontre d'une direction de pose, dans laquelle l'unité d'avance (13, 46) est reliée à un dispositif de pose (16, 54), qui peut être déplacé conjointement avec l'unité d'avance (13, 46), dans laquelle en outre une pièce de poussée (26, 50) montée par rapport à l'unité d'avance (13, 46) de manière mobile dans et à l'encontre de la direction de pose est reliée à l'unité d'avance (13, 46) par l'intermédiaire d'une unité d'accouplement (17, 48), **caractérisée en ce que** l'unité d'accouplement (17, 48) comprend une unité de blocage (18, 56), qui, à partir d'une position de blocage axiale prédéfinie, empêche un mouvement relatif de la pièce de poussée (26, 50) par rapport à l'unité d'avance (13, 46) à l'encontre de la direction de pose, tant que la force d'avance est inférieure à la force de blocage réglée, dans laquelle l'unité de blocage comprend un dispositif de desserrage (20, 62), par lequel le mouvement relatif de la pièce de poussée (26, 50) à l'encontre de la direction de pose est permis.

2. Unité d'assemblage selon la revendication 1, **caractérisée en ce que** l'unité de blocage (18, 56) est réalisée de telle sorte que la force de blocage est constante.

3. Unité d'assemblage selon la revendication 1 ou 2, **caractérisée en ce que** l'unité de blocage (18, 56) comprend un cylindre pneumatique (18, 56) ou cylindre hydraulique.

4. Unité d'assemblage selon la revendication 3, **caractérisée en ce que** l'unité de blocage (18, 56) comprend une soupape, en particulier une soupape de régulation ou une soupape de surpression, qui est reliée au cylindre.

5. Unité d'assemblage selon la revendication 3 ou 4, **caractérisée en ce que** le dispositif de desserrage comprend une soupape de ventilation (20, 62).

6. Unité d'assemblage selon la revendication 1 ou 2, **caractérisée en ce que** l'unité de blocage (18, 56) comprend un moteur électrique.

7. Unité d'assemblage selon l'une quelconque des revendications précédentes, **caractérisée en ce que** l'unité de blocage (18, 56) agit directement sur la pièce de poussée (26, 50).

8. Unité d'assemblage selon l'une quelconque des revendications précédentes, **caractérisée en ce que** l'unité de blocage (18, 56) comprend un élément d'appui, qui agit sur le composant (24, 58) à assembler.

9. Unité d'assemblage selon l'une quelconque des revendications précédentes, **caractérisée en ce que** l'unité d'accouplement (48) comprend un ressort (52), qui règle une position de base de la pièce de poussée (50) par rapport à l'unité d'avance (46).

10. Unité d'assemblage selon l'une quelconque des revendications précédentes, **caractérisée en ce qu'**après actionnement du dispositif de desserrage (20, 62), la force d'avance agit sur l'élément d'assemblage par l'intermédiaire du dispositif de pose (16, 54).

11. Unité d'assemblage selon l'une quelconque des revendications précédentes, **caractérisée en ce qu'**une détection de mise en place (25) est reliée à l'unité d'avance (13), qui détecte le moment de la mise en place de l'élément d'assemblage sur le composant (28), à la suite de quoi le dispositif de desserrage (20) est actionné.

12. Unité d'assemblage selon la revendication 9, **caractérisée en ce que** la détection de mise en place (25) comprend un capteur de force, qui est relié au dispositif de pose (16, 54) et détecte la force de traitement axiale sur le dispositif de pose (16, 54).

13. Unité d'assemblage selon la revendication 9, **caractérisée en ce que** la détection de mise en place (25) s'effectue par l'intermédiaire de l'entraînement de l'unité d'avance (13).

14. Unité d'assemblage selon l'une quelconque des revendications précédentes, **caractérisée en ce que** le dispositif de pose comprend une broche rotative (16, 54).

15. Unité d'assemblage selon la revendication 14, **caractérisée en ce que** la broche rotative peut produire une vitesse de rotation de 3 000/min à 10 000/min, afin d'établir une liaison à force, par complémentarité de formes ou de matières ou une combinaison des trois citées.

16. Unité d'assemblage selon la revendication 14 ou 15, **caractérisée en ce que** le dispositif de pose est guidé par la pièce de poussée (26, 50), dans laquelle la pièce de poussée (26, 50) est réalisée de manière cylindrique creuse.

17. Unité d'assemblage selon l'une quelconque des revendications précédentes, **caractérisée en ce que** la force d'avance est maintenue constante pendant le processus de précontrainte et après l'actionnement du dispositif de desserrage (20, 62).

18. Procédé pour assembler un composant (24, 58) avec un élément d'assemblage (28, 60) au moyen d'un robot articulé, dans lequel une unité d'avance (13, 46) pour l'introduction axiale d'un élément d'assemblage (28, 60) dans le composant (24, 58) est prévu sur le robot articulé, dans lequel l'unité d'avance (13, 46) comprend un dispositif de pose (16, 54), qui peut être équipé d'un élément d'assemblage (28, 60) et est conduit contre le composant (24, 58), dans lequel un dispositif de blocage pouvant être desserré limite le mouvement relatif du dispositif de pose (16, 54) par rapport au composant (24, 58) du fait d'une pièce de poussée (26, 50), dans la mesure où la force d'avance appliquée est plus petite qu'une force de blocage préréglée, dans lequel lors de la mise en place de l'élément d'assemblage (28, 60), le dispositif de blocage est desserré et la force d'avance à hauteur de la force de blocage est ainsi transmise par l'intermédiaire du dispositif de pose (16, 54) et de l'élément d'assemblage (28, 60) et donc sur le composant (24, 58).

19. Procédé selon la revendication 18, **caractérisé en ce que** la force de précontrainte à hauteur de la force de blocage agit jusqu'à la fin du processus d'assemblage.

20. Procédé selon la revendication 18 ou 19, **caractérisé en ce que** la force d'avance est maintenue constante pendant tout le processus d'assemblage.

21. Procédé selon l'une quelconque des revendications 18 à 20, **caractérisé en ce qu'**une unité d'assemblage selon l'une quelconque des revendications 1 à 17 est utilisée.
